# FASCICULE DE BREVET EUROPEEN

(11) **EP 3 558 069 B1**
(45) Date de publication et mention de la délivrance du brevet: **07.09.2022**
(21) Numéro de dépôt: 17829249.6
(22) Date de dépôt: 18.12.2017
(51) Int. Cl.: A47J 27/04

(54) **ACCESSOIRE POUR CHAUFFER ET/OU CUIRE A LA VAPEUR DES ALIMENTS ET CUISEUR VAPEUR COMPORTANT UN RECIPIENT ET UN ACCESSOIRE POUR CHAUFFER ET/OU CUIRE A LA VAPEUR DES ALIMENTS CONTENUS DANS LE RECIPIENT**
ZUBEHÖR FÜR DAMPFERWÄRMEN UND/ODER DAMPFGAREN VON SPEISEN UND DÄMPFER MIT EINEM BEHÄLTER UND EINEM ZUBEHÖR FÜR DAMPFERWÄRMEN UND/ODER DAMPFGAREN VON SPEISEN IN DEM BEHÄLTER
ACCESSORY FOR STEAM-HEATING AND/OR -COOKING FOOD AND STEAMER COMPRISING A CONTAINER AND AN ACCESSORY FOR STEAM-HEATING AND/OR -COOKING FOOD CONTAINED IN THE CONTAINER

(30) Priorité: 20.12.2016 FR 1662882
(43) Date de publication de la demande: 30.10.2019
(73) Titulaire: SEB S.A., 69130 Ecully (FR)
(72) Inventeur: DELRUE, Olivier, 21260 Selongey (FR); GUEGAN, Laurent, 74150 Lornay (FR); BLOND, Laurent, 21200 Beaune (FR)
(74) Mandataire: SEB Développement
(86) Numéro de dépôt international: PCT/FR2017/053669
(87) Numéro de publication internationale: WO 2018/115696

(56) Documents cités:
- WO-A2-2014/013417
- DE-A1- 19 907 049
- FR-A5- 2 161 447
- GB-A- 2 391 163

## Description

La présente invention concerne le domaine technique des appareils et dispositifs de production de vapeur pour chauffer et/ou cuire des aliments à la vapeur.

La présente invention concerne plus particulièrement les cuiseurs vapeur électriques comportant un récipient et un accessoire cuiseur vapeur disposé sur le récipient pour chauffer et/ou cuire à la vapeur des aliments contenus dans le récipient.

La présente invention concerne également les accessoires cuiseur vapeur disposés sur un récipient pour chauffer et/ou cuire à la vapeur des aliments contenus dans le récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 6 530 308 un accessoire cuiseur vapeur comprenant un générateur de vapeur comportant une chambre de production de vapeur comportant un dispositif de chauffe, la chambre de production de vapeur étant reliée à au moins une sortie de distribution de vapeur ménagée dans une partie inférieure du générateur de vapeur. Cette disposition permet d'injecter de la vapeur dans une enceinte de cuisson disposée en dessous du générateur de vapeur. La chambre de production de vapeur est alimentée en eau par l'intermédiaire d'un dispositif de contrôle de gouttes. Toutefois ce dispositif est plus adapté pour une injection ponctuelle de vapeur dans un gril que pour un chauffage ou une cuisson d'aliments au moyen de vapeur.

Un appareil selon le préambule de la revendication 1 est connu du document FR2161447.

Un objet de la présente invention est de proposer un cuiseur vapeur électrique pour chauffer et/ou cuire des aliments à la vapeur comportant un récipient et un accessoire cuiseur vapeur, qui permette de contrôler l'échappement de la vapeur.

Un autre objet de la présente invention est de proposer un cuiseur vapeur électrique pour chauffer et/ou cuire des aliments à la vapeur comportant un récipient et un accessoire cuiseur vapeur, qui soit adapté à différentes tailles de récipients.

Un autre objet de la présente invention est de proposer un cuiseur vapeur électrique pour chauffer et/ou cuire des aliments à la vapeur comportant un récipient et un accessoire cuiseur vapeur, qui présente une construction économique.

Un autre objet de la présente invention est de proposer un accessoire cuiseur vapeur utilisé avec un récipient pour chauffer et/ou cuire des aliments à la vapeur, qui permette de contrôler l'échappement de la vapeur.

Un autre objet de la présente invention est de proposer un accessoire cuiseur vapeur utilisé avec un récipient pour chauffer et/ou cuire des aliments à la vapeur, qui soit adapté à différentes tailles de récipients.

Un autre objet de la présente invention est de proposer un accessoire cuiseur vapeur utilisé avec un récipient pour chauffer et/ou cuire des aliments à la vapeur, qui présente une construction économique.

Ces objets sont atteints avec un accessoire cuiseur vapeur pour chauffer et/ou cuire à la vapeur des aliments contenus dans un récipient portant l'accessoire cuiseur vapeur, l'accessoire cuiseur vapeur comprenant un générateur de vapeur comportant une chambre de production de vapeur reliée à au moins une sortie de distribution de vapeur ménagée dans une partie inférieure du générateur de vapeur, l'accessoire cuiseur vapeur comportant une face d'appui prévue pour reposer sur le récipient, du fait que la face d'appui présente une échancrure ménageant un échappement apte à mettre en communication l'intérieur du récipient avec l'extérieur du récipient lorsque le récipient porte l'accessoire cuiseur vapeur. Ainsi le récipient utilisé peut être dépourvu de conformation spécifique prévue pour ménager au moins partiellement l'échappement. L'échappement formé par l'échancrure est plus facile à nettoyer qu'un conduit traversant l'accessoire cuiseur vapeur.

Avantageusement alors, l'accessoire cuiseur vapeur comprend une bague portant et entourant le générateur de vapeur, et l'échappement est ménagé dans la bague. Un même type de générateur de vapeur peut ainsi être assemblé avec différentes tailles de bagues. Cette disposition permet de faciliter l'adaptation de l'accessoire cuiseur vapeur à différentes tailles de récipients.

Avantageusement alors la bague est amovible par rapport au générateur de vapeur. Un même type de générateur de vapeur peut ainsi être utilisé avec différentes tailles de bagues.

Avantageusement encore, l'accessoire cuiseur vapeur comprend un réservoir d'eau. Une telle réalisation est bien adaptée à un appareil domestique.

Avantageusement alors, le réservoir d'eau est porté par la bague.

Avantageusement encore, l'accessoire cuiseur vapeur comprend un réservoir d'eau alimentant en eau la chambre de production de vapeur. Cette disposition permet de chauffer une quantité d'eau plus réduite, ce qui favorise une obtention plus rapide de vapeur. En alternative, la chambre de production de vapeur pourrait comporter le réservoir d'eau. En d'autres termes, la chambre de production de vapeur comporte alors un dispositif de chauffe permettant de chauffer le réservoir d'eau comme par exemple dans une bouilloire.

Selon un mode de réalisation, le réservoir d'eau est amovible par rapport au générateur de vapeur et le générateur de vapeur porte le réservoir d'eau amovible. Cette disposition permet de faciliter le remplissage du réservoir d'eau.

Avantageusement encore, le générateur de vapeur présente une paroi inférieure dans laquelle est formée ladite au moins une sortie de distribution de vapeur, et la chambre de production de vapeur est agencée dans le générateur de vapeur à distance de la paroi inférieure. Ces dispositions permettent de réaliser une chambre de distribution de vapeur sous la chambre de production de vapeur, ce qui permet plus de liberté dans l'agencement des sorties de distribution de vapeur.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Ces objets sont également atteints avec un cuiseur vapeur électrique comportant un récipient pour contenir les aliments à chauffer et/ou à cuire et un accessoire cuiseur vapeur prévu pour reposer sur le récipient pour chauffer et/ou cuire à la vapeur les aliments contenus dans le récipient, du fait que l'accessoire cuiseur vapeur est conforme à l'une au moins des caractéristiques précitées.

L'invention sera mieux comprise à l'étude de quatre exemples de réalisation, pris à titre nullement limitatif, illustrés dans les figures 1 à 7 annexées, dans lesquelles :
- la figure 1 est une vue schématique en élévation et en coupe d'un premier exemple de réalisation d'un cuiseur vapeur selon l'invention, comportant un premier mode de réalisation d'une partie chauffante,
- la figure 2 est une vue en perspective et en coupe d'un deuxième mode de réalisation d'une partie chauffante de cuiseur vapeur,
- la figure 3 est une vue en perspective et en coupe de la partie chauffante illustrée sur la figure 2, selon une autre orientation,
- la figure 4 est une vue en perspective et en coupe de la partie chauffante illustrée sur les figures 2 et 3, selon une autre section de coupe
- la figure 5 est une vue schématique en élévation d'un deuxième exemple de réalisation d'un cuiseur vapeur selon l'invention,
- la figure 6 est une vue schématique en élévation d'un troisième exemple de réalisation d'un cuiseur vapeur selon l'invention,
- la figure 7 est une vue partielle en perspective d'un quatrième exemple de réalisation d'un cuiseur vapeur selon l'invention.

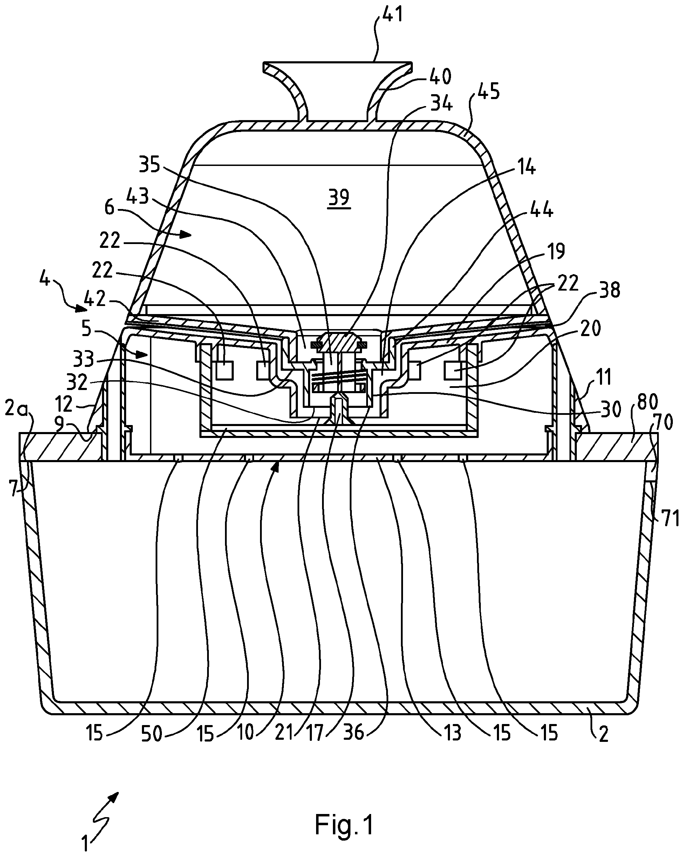

La figure 1 illustre un exemple de réalisation d'un cuiseur vapeur électrique 1 comportant un récipient 2 pour contenir les aliments à chauffer et/ou à cuire et un accessoire cuiseur vapeur 4 pour chauffer et/ou cuire à la vapeur les aliments contenus dans le récipient 2. Le récipient 2 porte l'accessoire cuiseur vapeur 4. L'accessoire cuiseur vapeur 4 comprend un générateur de vapeur 5.

Ainsi tel que représenté sur la figure 1, l'accessoire cuiseur vapeur 4 comporte une face d'appui 7 prévue pour reposer sur le récipient 2.

Plus particulièrement dans l'exemple de réalisation illustré sur la figure 1, l'accessoire cuiseur vapeur 4 comporte une bague 80 entourant et portant le générateur de vapeur 5. La bague 80 repose sur le récipient 2. Ainsi la bague 80 comporte la face d'appui 7. Si désiré la bague 80 peut être amovible par rapport au générateur de vapeur 5.

Le récipient 2 ménage avec l'accessoire cuiseur vapeur 4 un échappement 70 mettant en communication l'intérieur du récipient 2 avec l'extérieur du récipient 2, pour permettre à la vapeur de s'échapper hors du récipient 2.

Plus particulièrement dans l'exemple de réalisation illustré sur la figure 1, l'échappement 70 est ménagé dans un bord supérieur 2a du récipient 2. Ainsi l'accessoire cuiseur vapeur 4 peut être dépourvu de conformation spécifique prévue pour ménager au moins partiellement l'échappement 70.

A cet effet le bord supérieur 2a du récipient 2 présente une échancrure 71 délimitant l'échappement 70 avec une partie inférieure de la bague 80. L'échancrure 71 est une échancrure supérieure. En alternative ou en complément, l'échancrure 71 pourrait être formée par une protubérance externe de la paroi latérale du récipient 2.

Tel que visible sur la figure 1, l'accessoire cuiseur vapeur 4 comprend le générateur de vapeur 5 et un réservoir d'eau 6. Le réservoir d'eau 6 est amovible par rapport au générateur de vapeur 5 et le générateur de vapeur 5 porte le réservoir d'eau 6 amovible. Le générateur de vapeur 5 comporte une entrée d'admission d'eau 14 alimentée en eau par le réservoir d'eau 6 disposé sur le générateur de vapeur 5. Le générateur de vapeur 5 comporte une chambre de production de vapeur 20. Le réservoir d'eau 6 alimente en eau la chambre de production de vapeur 20. A cet effet la chambre de production de vapeur 20 présente une entrée d'alimentation en eau 21 alimentée en eau par le réservoir d'eau 6 disposé sur le générateur de vapeur 5. La chambre de production de vapeur 20 comporte un dispositif de chauffe 50 pour transformer en vapeur l'eau présente dans la chambre de production de vapeur 20. La chambre de production de vapeur 20 présente au moins une sortie d'évacuation de vapeur 22. La chambre de production de vapeur 20 est reliée à au moins une sortie de distribution de vapeur 15 ménagée dans une partie inférieure 10 du générateur de vapeur 5. La face d'appui 7 s'étend autour de ladite au moins une sortie de distribution de vapeur 15.

Plus particulièrement, le générateur de vapeur 5 présente une surface d'appui annulaire inférieure 9 prévue pour reposer sur la bague 80. L'entrée d'admission d'eau 14 du générateur de vapeur 5 est agencée dans une face supérieure 19 du générateur de vapeur 5. L'entrée d'admission d'eau 14 forme un entonnoir. L'entrée d'admission d'eau 14 débouche dans l'entrée d'alimentation en eau 21 de la chambre de production de vapeur 20. Le générateur de vapeur 5 présente une paroi inférieure 13 dans laquelle est formée ladite au moins une sortie de distribution de vapeur 15. Le générateur de vapeur 5 présente une paroi latérale extérieure 12 s'étendant en dessous du réservoir d'eau 6 disposé sur le générateur de vapeur 5.

Dans l'exemple de réalisation illustré sur la figure 1, le dispositif de chauffe 50 est agencé dans le fond de la chambre de production de vapeur 20. Le dispositif de chauffe 50 peut notamment comporter un élément chauffant sérigraphié, ou un élément chauffant blindé disposé sous une plaque de diffusion de chaleur et/ou dans une plaque de diffusion de chaleur. A titre de variante, le dispositif de chauffe 50 pourrait notamment être agencé à l'intérieur de la chambre de production de vapeur 20.

Selon une forme de réalisation préférée, la chambre de production de vapeur 20 présente au moins une sortie d'évacuation de vapeur 22 disposée plus haut que l'entrée d'alimentation en eau 21, ladite au moins une sortie d'évacuation de vapeur 22 communiquant avec ladite au moins une sortie de distribution de vapeur 15.

Dans l'exemple de réalisation illustré sur la figure 1, la chambre de production de vapeur 20 présente plusieurs sorties d'évacuation de vapeur 22 disposées plus haut que l'entrée d'alimentation en eau 21 et communiquant avec les sorties de distribution de vapeur 15. La chambre de production de vapeur 20 est agencée dans le générateur de vapeur 5 à distance de la paroi inférieure 13, ce qui permet une plus grande liberté dans la position des sorties de distribution de vapeur 15. La chambre de production de vapeur 20 est agencée dans le générateur de vapeur 5 à distance de la paroi latérale extérieure 12. La partie inférieure 10 forme la paroi inférieure 13.

Le réservoir d'eau 6 comporte une sortie d'écoulement 32 alimentant en eau le générateur de vapeur 5.

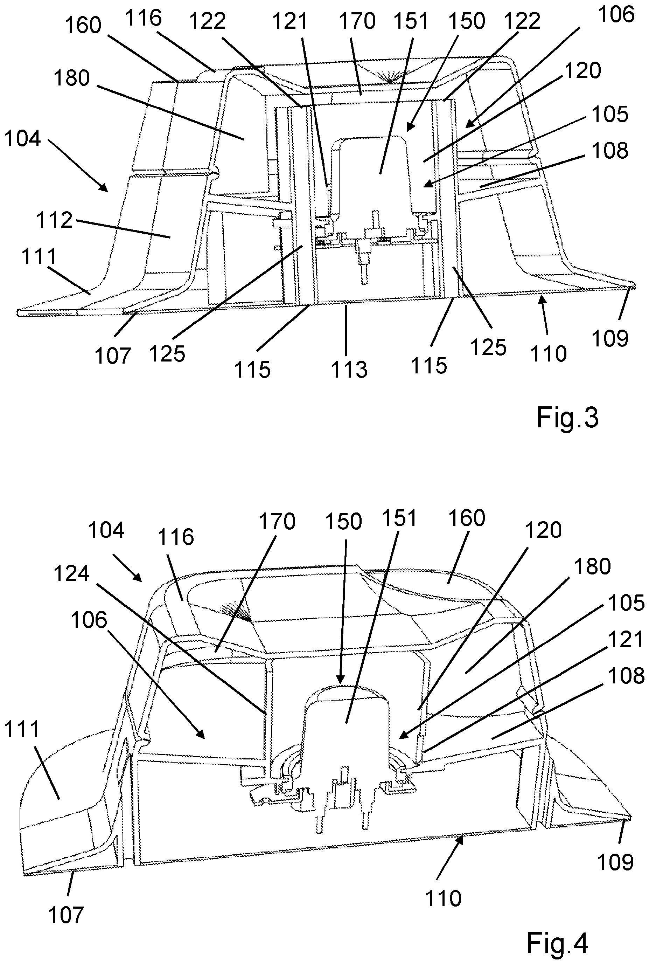

Dans l'exemple de réalisation illustré sur la figure 1, l'accessoire cuiseur vapeur 4 comporte au moins un passage d'air 38 mettant en communication la sortie d'écoulement 32 avec l'extérieur lorsque le réservoir d'eau 6 est disposé sur le générateur de vapeur 5. Tel que bien visible sur la figure 4, ledit au moins un passage d'air 38 est ménagé entre le réservoir d'eau 6 et le générateur de vapeur 5, plus particulièrement entre une face inférieure 33 du réservoir d'eau 6 et la face supérieure 19 du générateur de vapeur 5. Le réservoir d'eau 6 et/ou le générateur de vapeur 5 peuvent présenter à cet effet des entretoises (non représentées sur la figure 1) pour écarter la face inférieure 33 du réservoir d'eau 6 de la face supérieure 19 du générateur de vapeur 5. A titre de variante, ledit au moins un passage d'air 38 peut notamment être ménagé dans le réservoir d'eau 6 et/ou dans le générateur de vapeur 5.

Dans l'exemple de réalisation illustré sur la figure 1, la sortie d'écoulement 32 est agencée dans la face inférieure 33 du réservoir d'eau 6. La partie inférieure du réservoir d'eau 6 repose sur la partie supérieure du générateur de vapeur 5.

Plus particulièrement, la sortie d'écoulement 32 s'étend au-dessus de l'entrée d'alimentation en eau 21 de la chambre de production de vapeur 20. La sortie d'écoulement 32 présente un clapet 34 mobile entre une position d'obturation dans laquelle la sortie d'écoulement 32 est obturée et une position d'écoulement dans laquelle la sortie d'écoulement 32 autorise l'écoulement de l'eau hors du réservoir d'eau 6. De préférence, le réservoir d'eau 6 comporte au moins une surface d'appui 36 s'étendant en dessous du clapet 34 disposé en position d'obturation, pour prévenir les actionnements intempestifs du clapet 34. Selon une forme de réalisation préférée, le clapet 34 est entouré par un conduit 30 s'étendant en dessous du clapet 34 disposé en position d'obturation.

Dans l'exemple de réalisation illustré sur la figure 1, le générateur de vapeur 5 présente un ergot 17 repoussant le clapet 34 vers la position d'écoulement lorsque le réservoir d'eau 6 est disposé sur le générateur de vapeur 5. Tel que visible sur la figure 1, l'ergot 17 est agencé dans la chambre de production de vapeur 20. Le clapet 34 est mobile selon une direction principalement verticale. Le clapet 34 est repoussé vers la position d'obturation par un élément de rappel élastique 35. L'élément de rappel élastique 35 est avantageusement formé par un ressort hélicoïdal. La surface d'appui 36 est formée par la sortie d'écoulement 32. A titre de variante, le clapet 34 peut présenter un ergot repoussé par la chambre de production de vapeur 20 lorsque le réservoir d'eau 6 est disposé sur le générateur de vapeur 5.

Selon une forme de réalisation préférée, le réservoir d'eau 6 peut être positionné sur le générateur de vapeur 5 selon plusieurs orientations angulaires. Dans l'exemple de réalisation illustré sur la figure 1, le réservoir d'eau 6 peut être positionné sur le générateur de vapeur 5 sans indexation particulière. Plus particulièrement, l'entrée d'admission d'eau 14 est agencée dans la partie centrale de la face supérieure 19 du générateur de vapeur 5.

Selon une forme de réalisation préférée, le réservoir d'eau 6 comporte un organe de préhension 40. Dans l'exemple de réalisation illustré sur la figure 1, l'organe de préhension 40 est agencé à l'opposé de la sortie d'écoulement 32. L'organe de préhension 40 présente une surface d'appui 41 prévue pour porter le réservoir d'eau 6 lorsque le réservoir d'eau 6 est disposé en position retournée.

Le réservoir d'eau 6 peut être réalisé en deux parties assemblées, si désiré démontables, notamment pour le remplissage et/ou pour le nettoyage. Dans l'exemple de réalisation illustré sur la figure 1, la face inférieure 33 du réservoir d'eau 6 est formée par une base 42 comportant un orifice 43 autour duquel est monté un bouchon 44 présentant la sortie d'écoulement 32. Le bouchon 44 loge le clapet 34. Un corps 45 est monté sur la base 42. L'organe de préhension 40 est issu du corps 45. Le corps 45 peut être assemblé de manière démontable ou non avec la base 42. A titre de variante, l'organe de préhension 40 peut notamment être issu de la base 42, ou être rapporté ou fixé sur le corps 45 ou sur la base 42. Le réservoir d'eau 6 peut comporter un orifice de remplissage distinct de la sortie d'écoulement 32. Si désiré, l'orifice de remplissage peut être obturé.

Le cuiseur vapeur électrique 1 illustré sur la figure 1 fonctionne et s'utilise de la manière suivante.

L'utilisateur dispose les aliments à chauffer ou à cuire dans le récipient 2 puis positionne l'accessoire cuiseur vapeur 4 sur le récipient 2 après avoir rempli le réservoir d'eau 6. L'utilisateur peut remplir le réservoir d'eau 6 par exemple en retirant la base 42 du corps 45 après avoir retourné le réservoir d'eau 6. L'utilisateur replace ensuite la base 42 sur le corps 45 et retourne à nouveau le réservoir d'eau 6 pour positionner le réservoir d'eau 6 sur le générateur de vapeur 5. La sortie d'écoulement 32 du réservoir d'eau 6 s'étend alors dans l'entrée d'admission d'eau 14 du générateur de vapeur 5. Le clapet 34 est repoussé vers la position d'écoulement par le générateur de vapeur 5 lorsque le réservoir d'eau 6 est disposé sur le générateur de vapeur 5. L'ergot 17 s'étend alors à l'intérieur du conduit 30 et repousse le clapet 34 vers la position d'écoulement, de sorte que l'eau issue de la sortie d'écoulement 32 du réservoir d'eau 6 s'écoule dans l'entrée d'admission d'eau 14 du générateur de vapeur 5 pour atteindre la sortie d'écoulement 32 du réservoir d'eau 6. Le niveau d'eau monte dans la chambre de production de vapeur 20 jusqu'à atteindre la sortie d'écoulement 32. Le réservoir d'eau 6 disposé sur le générateur de vapeur 5 forme une chambre fermée 39 au-dessus de la sortie d'écoulement 32. L'eau ne peut s'écouler hors du réservoir d'eau 6 que si de l'air prend sa place. A cet effet la sortie d'écoulement 32 communiquant avec l'extérieur de l'accessoire cuiseur vapeur 4 par le passage d'air 38 permet que de l'air rentre dans le réservoir d'eau 6, tant que le niveau de l'eau n'atteint pas la sortie d'écoulement 32.

L'utilisateur met alors en marche le dispositif de chauffe 50. La température de l'eau présente dans la chambre de production de vapeur s'élève jusqu'à ce que de la vapeur soit produite. La vapeur s'échappe alors par les sorties d'évacuation de vapeur 22 pour atteindre les sorties de distribution de vapeur 15 et se répandre dans le récipient 2 pour cuire ou chauffer les aliments présents dans le récipient 2. L'air présent au-dessus des aliments peut s'échapper par l'échappement 70. La production de vapeur entraîne une diminution du niveau de l'eau présente dans la chambre de production de vapeur 20 en dessous de la sortie d'écoulement 32, ce qui permet une réalimentation de la chambre de production de vapeur 20 en eau. L'eau peut alors s'écouler du réservoir d'eau 6 par la sortie d'écoulement 32, jusqu'à ce que le niveau de l'eau atteigne la sortie d'écoulement 32, de l'air provenant de l'extérieur de l'accessoire cuiseur vapeur 4 passant par le passage d'air 38 pour entrer par la sortie d'écoulement 32 dans le réservoir d'eau 6.

Lorsque les aliments présents dans le récipient 2 sont saturés en vapeur, la vapeur s'échappe par l'échappement 70.

Le réservoir d'eau 6 alimente en eau la chambre de production de vapeur 20 par gravité. En d'autres termes, l'eau s'écoule du réservoir d'eau 6 pour alimenter la chambre de production de vapeur 20.

A titre de variante, le réservoir d'eau 6 ne comporte pas nécessairement un clapet 34. La sortie d'écoulement 32 du réservoir d'eau 6 peut notamment être calibrée pour que le débit d'eau entrant dans la chambre de production de vapeur 20 permette la vaporisation de l'eau présente dans la chambre de production de vapeur 20 sans que de l'eau ne déborde de la chambre de production de vapeur 20.

A titre de variante, l'entrée d'admission d'eau 14 et l'entrée d'alimentation en eau 21 peuvent être confondues.

A titre de variante, le réservoir d'eau 6 peut être verrouillé par baïonnette sur le générateur de vapeur 5. A cet effet le réservoir d'eau 6 peut par exemple comporter des pattes prévues pour un accrochage par rotation avec le générateur de vapeur, ou vice-versa.

A titre de variante, l'accessoire cuiseur vapeur 4 peut comporter une pompe pour contrôler l'écoulement de l'eau hors du réservoir d'eau 6 afin d'alimenter la chambre de production de vapeur 20. Pour simplifier les connexions électriques, la pompe peut être avantageusement disposée dans le générateur de vapeur 5.

A titre de variante, la bague 80 pourrait porter le générateur de vapeur 5.

A titre de variante, l'accessoire cuiseur vapeur 4 ne comporte pas nécessairement une bague 80.

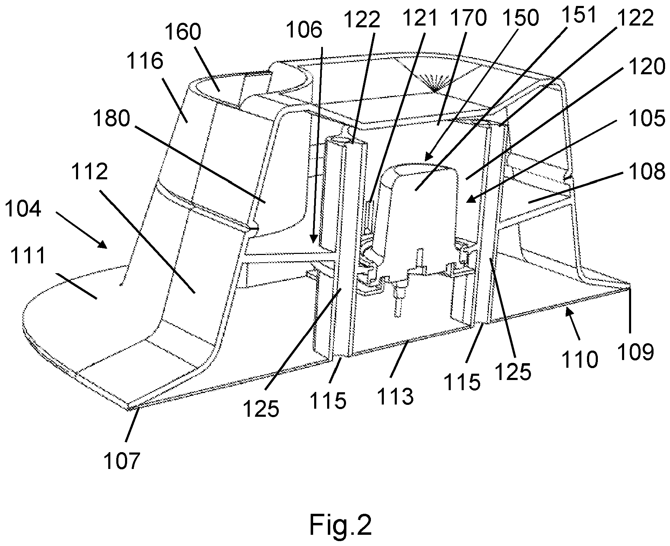

Les figures 2 à 4 illustrent un autre mode de réalisation d'un accessoire cuiseur vapeur 104 prévu pour chauffer et/ou cuire à la vapeur des aliments contenus dans un récipient (non représenté aux figures). Le récipient ménage, si désiré avec l'accessoire cuiseur vapeur 104, au moins un échappement mettant en communication l'intérieur du récipient avec l'extérieur du récipient.

L'accessoire cuiseur vapeur 104 comporte une face d'appui 107 prévue pour reposer sur le récipient.

L'accessoire cuiseur vapeur 104 comprend le générateur de vapeur 105 et un réservoir d'eau 106.

Le réservoir d'eau 106 communique avec l'extérieur par un orifice de remplissage 160. Si désiré, le réservoir d'eau 106 peut présenter au moins un autre orifice de remplissage.

Le générateur de vapeur 105 comporte une chambre de production de vapeur 120. Le réservoir d'eau 106 alimente en eau la chambre de production de vapeur 120 par gravité. A cet effet le réservoir d'eau 106 communique par une entrée d'alimentation en eau 121 avec la chambre de production de vapeur 120. Si désiré le réservoir d'eau 106 peut communiquer avec la chambre de production de vapeur 120 par au moins une autre entrée d'alimentation en eau.

De préférence, le réservoir d'eau 106 présente un fond 108 déversant vers l'entrée d'alimentation en eau 121.

Dans le mode de réalisation illustré sur les figures 2 à 4, le réservoir d'eau 106 entoure la chambre de production de vapeur 120. A cet effet une paroi annulaire 124, mieux visible sur la figure 4, entoure la chambre de production de vapeur 120. L'entrée d'alimentation en eau 121 est formée dans la paroi annulaire 124.

La chambre de production de vapeur 120 comporte un dispositif de chauffe 150 pour transformer en vapeur l'eau présente dans la chambre de production de vapeur 120. Dans le mode de réalisation illustré sur les figures 2 à 4, le dispositif de chauffe 150 comprend un plot chauffant 151. A titre de variante, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120. Si désiré, la chambre de production de vapeur 120 peut comporter plusieurs dispositifs de chauffe.

La chambre de production de vapeur 120 est reliée à au moins une sortie de distribution de vapeur 115 ménagée dans une partie inférieure 110 du générateur de vapeur 105. A cet effet, la chambre de production de vapeur 120 communique avec au moins une sortie d'évacuation de vapeur 122 disposée plus haut que l'entrée d'alimentation en eau 121. La chambre de production de vapeur 120 est confinée au-dessus de la ou des sortie(s) d'évacuation de vapeur 122. La ou chaque sortie d'évacuation de vapeur 122 communique par un conduit 125 avec la ou l'une des sortie(s) de distribution de vapeur 115.

Plus particulièrement dans le mode de réalisation illustré sur les figures 2 à 4, la chambre de production de vapeur 120 communique avec la ou les sortie(s) d'évacuation de vapeur 122 par une chambre d'expansion de vapeur 170 disposée au-dessus de la chambre de production de vapeur 120. En d'autres termes, ladite chambre d'expansion de vapeur est dépourvue de communication avec l'extérieur au-dessus de ladite au moins une sortie d'évacuation de vapeur 122. Une paroi latérale séparatrice 180 est agencée entre l'orifice de remplissage 160 et la chambre d'expansion de vapeur 170 pour éviter les échappements de vapeur par l'orifice de remplissage 160. A cet effet, la paroi latérale séparatrice 180 s'étend plus bas que la ou les sorties(s) d'évacuation de vapeur 122. En d'autres termes, la paroi latérale séparatrice 180 s'étend en dessous de la ou des sortie(s) d'évacuation de vapeur 122. Plus particulièrement, la paroi latérale séparatrice 180 s'étend plus bas que l'entrée d'alimentation en eau 121. Tel que bien visible sur les figures 2 à 4, la paroi latérale séparatrice 180 s'étend dans le réservoir d'eau 106. En d'autres termes, l'eau peut atteindre les deux faces de la partie inférieure de la paroi latérale séparatrice 180.

Dans le mode de réalisation illustré sur les figures 2 à 4, la chambre de production de vapeur 120 présente plusieurs sorties d'évacuation de vapeur 122 disposées plus haut que l'entrée d'alimentation en eau 121 et communiquant par plusieurs conduits 125 avec les sorties de distribution de vapeur 115. Plus particulièrement, les conduits 125 sont ménagés dans la paroi annulaire 124. Deux groupes de trois conduits 125 sont disposés de part et d'autre du plot chauffant 151. Les conduits 125 sont verticaux. A titre de variante les conduits 125 peuvent être descendants sans nécessairement être verticaux. De préférence les conduits 125 sont dépourvus de chicanes. En d'autres termes, les conduits 125 sont descendants de manière continue, sans nécessairement être rectilignes.

Plus particulièrement, le générateur de vapeur 105 présente une surface d'appui annulaire inférieure 109 prévue pour reposer sur un récipient (non représenté) adapté à la géométrie du générateur de vapeur 105. Ainsi le générateur de vapeur 105 comporte la face d'appui 107.

Le générateur de vapeur 105 présente une paroi inférieure 113 dans laquelle est/sont formée(s) la ou les sorties de distribution de vapeur 115. La chambre de production de vapeur 120 est agencée dans le générateur de vapeur 105 à distance de la paroi inférieure 113, ce qui permet une plus grande liberté dans la position des sorties de distribution de vapeur 115. Tel que visible sur les figures 3 et 4, la face d'appui 107 s'étend autour des sorties de distribution de vapeur 115.

Le générateur de vapeur 105 présente une paroi latérale extérieure 112. Le fond 108 du réservoir d'eau 106 relie la paroi latérale extérieure 112 à la paroi annulaire 124. La chambre de production de vapeur 120 est agencée dans le générateur de vapeur 105 à distance de la paroi latérale extérieure 112.

L'accessoire cuiseur vapeur 104 présente une paroi supérieure 116 avantageusement réalisée en matière transparente ou translucide. La paroi supérieure 116 est assemblée avec la paroi latérale extérieure 112, par exemple par clipsage, par collage, par surmoulage, par vissage ou par soudage. La paroi supérieure 116 forme une partie du réservoir d'eau 106. La paroi latérale séparatrice 180 est issue de la paroi supérieure 116. La paroi supérieure 116 forme la partie supérieure de la chambre d'expansion de vapeur 170.

Ainsi l'accessoire cuiseur vapeur 104 illustré sur les figures 2 à 4 est dépourvu de conformation spécifique prévue pour ménager au moins partiellement un échappement.

L'accessoire cuiseur vapeur 104 illustré sur les figures 2 à 4 fonctionne et s'utilise de la manière suivante.

L'utilisateur dispose l'accessoire cuiseur vapeur 104 sur ledit récipient après avoir disposé les aliments dans ledit récipient. L'utilisateur remplit le réservoir d'eau 106 par l'orifice de remplissage 160. L'eau s'écoule par l'entrée d'alimentation en eau 121 dans la chambre de production de vapeur 120. De préférence, l'utilisateur remplit le réservoir d'eau 106 jusqu'à un niveau suffisamment inférieur aux sorties d'évacuation de vapeur 122, pour éviter que l'eau atteigne les sorties d'évacuation de vapeur 122 et s'écoule par les conduits 125. L'utilisateur met alors en marche le dispositif de chauffe 150. La température de l'eau présente dans la chambre de production de vapeur 120 s'élève jusqu'à ce que de la vapeur soit produite. La vapeur s'élève depuis la chambre de production de vapeur 120 pour atteindre la chambre d'expansion de vapeur 170. La vapeur est alors confinée par la paroi supérieure 116, par la paroi latérale séparatrice 180 et par l'eau présente dans le réservoir d'eau 106. La vapeur s'échappe alors par les sorties d'évacuation de vapeur 122 pour atteindre les sorties de distribution de vapeur 115 en descendant par les conduits 125. La vapeur sortant des sorties de distribution de vapeur 115 se répand dans le récipient.

L'air présent au-dessus des aliments peut s'échapper par l'échappement. Lorsque les aliments présents dans le récipient sont saturés en vapeur, la vapeur s'échappe par l'échappement.

A titre de variante, l'accessoire cuiseur vapeur 104 pourrait comporter une bague portant le générateur de vapeur 105.

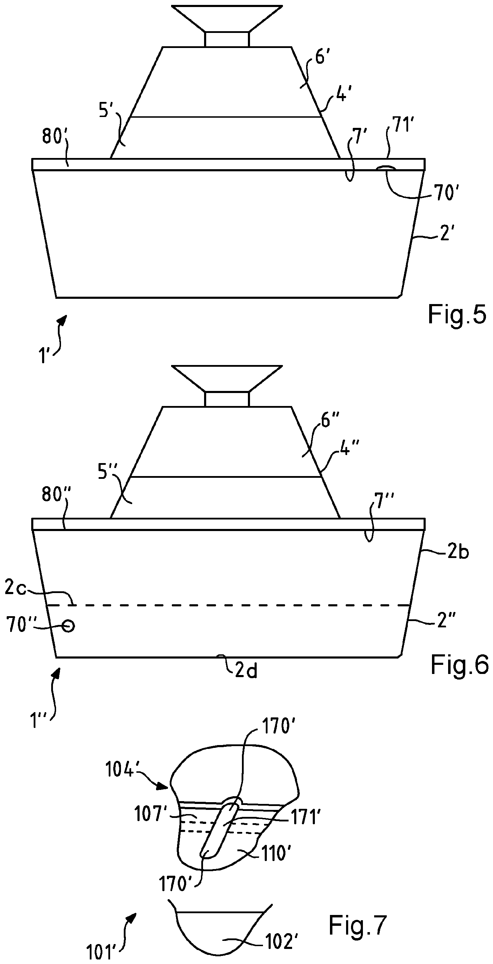

Le cuiseur vapeur électrique 1' illustré sur la figure 5 comporte un récipient 2' ménageant avec un accessoire cuiseur vapeur 4' un échappement 70' mettant en communication l'intérieur du récipient 2' avec l'extérieur du récipient 2'. L'accessoire cuiseur vapeur 4' comporte un générateur de vapeur 5' qui peut être similaire au générateur de vapeur 5. L'accessoire cuiseur vapeur 4' est prévu pour chauffer et/ou cuire à la vapeur des aliments contenus dans le récipient 2' portant l'accessoire cuiseur vapeur 4', tel que représenté sur la figure 5.

Ainsi tel que représenté sur la figure 5, l'accessoire cuiseur vapeur 4' comporte une face d'appui 7' prévue pour reposer sur le récipient 2'.

Plus particulièrement dans l'exemple de réalisation illustré sur la figure 5, l'accessoire cuiseur vapeur 4' comporte une bague 80' entourant et portant le générateur de vapeur 5'. La bague 80' repose sur le récipient 2'. Ainsi la bague 80' comporte la face d'appui 7'. Si désiré la bague 80' peut être amovible par rapport au générateur de vapeur 5'.

Le cuiseur vapeur électrique 1' illustré sur la figure 5 diffère du cuiseur vapeur électrique 1 illustré sur la figure 1 en ce que l'échappement 70' est ménagé dans l'accessoire cuiseur vapeur 4'. Ainsi le récipient 2' peut être dépourvu de conformation spécifique prévue pour ménager au moins partiellement l'échappement 70'.

Plus particulièrement dans l'exemple de réalisation illustré sur la figure 5, l'échappement 70' est ménagé dans la bague 80'. La bague 80' présente une échancrure 71'.

Tel que représenté sur la figure 5, la face d'appui 107' présente l'échancrure 71'. L'échancrure 71' forme l'échappement 70' apte à mettre en communication l'intérieur du récipient 2' avec l'extérieur du récipient 2' lorsque le récipient 2' porte l'accessoire cuiseur vapeur 4'. Ainsi lorsque le récipient 2' est saturé en vapeur, l'excès de vapeur peut s'échapper hors du récipient 2' par l'échappement 70'.

Tel que bien visible sur la figure 5, l'échappement 70' est ménagé dans une partie inférieure de la bague 80'. A cet effet l'échancrure 71' délimite l'échappement 70' avec le bord supérieur du récipient 2'. L'échancrure 71' est ainsi une échancrure inférieure. En alternative ou en complément, l'échancrure 71' pourrait être une échancrure latérale laissant libre une partie du bord supérieur du récipient 2'.

A titre de variante, l'accessoire cuiseur vapeur 4' ne comporte pas nécessairement une bague 80'. L'échappement 70' peut alors notamment être ménagé dans le générateur de vapeur 5'.

Le cuiseur vapeur électrique 1" illustré sur la figure 6 comporte un accessoire cuiseur vapeur 4" ainsi qu'un récipient 2" ménageant un échappement 70" mettant en communication l'intérieur du récipient 2" avec l'extérieur du récipient 2". L'accessoire cuiseur vapeur 4" comporte un générateur de vapeur 5" qui peut être similaire au générateur de vapeur 5.

Ainsi tel que représenté sur la figure 6, l'accessoire cuiseur vapeur 4" comporte une face d'appui 7" prévue pour reposer sur le récipient 2".

Plus particulièrement dans l'exemple de réalisation illustré sur la figure 6, l'accessoire cuiseur vapeur 4" comporte une bague 80" entourant et portant le générateur de vapeur 5". La bague 80" repose sur le récipient 2". Si désiré la bague 80" peut être amovible par rapport au générateur de vapeur 5".

Le cuiseur vapeur électrique 1" illustré sur la figure 6 diffère du cuiseur vapeur électrique 1 illustré sur la figure 1 en ce que l'échappement 70" est ménagé dans une paroi latérale 2b du récipient 2". Ainsi l'accessoire cuiseur vapeur 4" peut également être dépourvu de conformation spécifique prévue pour ménager au moins partiellement l'échappement 70".

Plus particulièrement dans l'exemple de réalisation illustré sur la figure 6, un support ajouré 2c est disposé dans le récipient 2" à distance d'un fond 2d du récipient 2". Le support ajouré 2c s'étend au-dessus de l'échappement 70". Ainsi la vapeur doit traverser le support ajouré 2c portant les aliments avant d'atteindre l'échappement 70", ce qui favorise une bonne imprégnation des aliments par la vapeur.

A titre de variante, l'accessoire cuiseur vapeur 4" ne comporte pas nécessairement une bague 80".

Le cuiseur vapeur électrique 101' illustré partiellement sur la figure 7 comporte un accessoire cuiseur vapeur 104' et un récipient 102'. L'accessoire cuiseur vapeur 104' est prévu pour chauffer et/ou cuire à la vapeur des aliments contenus dans le récipient 102' portant l'accessoire cuiseur vapeur 104'. Le récipient 102' ménage avec l'accessoire cuiseur vapeur 104' un échappement 170' mettant en communication l'intérieur du récipient 102' avec l'extérieur du récipient 102'.

Tel que représenté sur la figure 7, l'accessoire cuiseur vapeur 104' comporte une face d'appui 107' prévue pour reposer sur le récipient 102'.

L'accessoire cuiseur vapeur 104' comporte un générateur de vapeur, qui peut être similaire au générateur de vapeur 105. L'accessoire cuiseur vapeur 104' est dépourvu de bague portant le générateur de vapeur. Le générateur de vapeur comporte la face d'appui 107'.

L'accessoire cuiseur vapeur 104' illustré sur la figure 7 diffère de l'accessoire cuiseur vapeur 104 illustré sur les figures 2 à 4 en ce que l'échappement 170' est ménagé dans l'accessoire cuiseur vapeur 104'. Ainsi le récipient 102' peut être dépourvu de conformation spécifique prévue pour ménager au moins partiellement l'échappement 170'. A cet effet la face d'appui 107' présente une échancrure 171' ménageant l'échappement 170' apte à mettre en communication l'intérieur du récipient 102' avec l'extérieur du récipient 102' lorsque le récipient 102' porte l'accessoire cuiseur vapeur 104'.

Tel que représenté sur la figure 7, l'échancrure 171' est une échancrure inférieure. En alternative ou en complément, l'échancrure 171' pourrait être une échancrure latérale laissant libre une partie du bord supérieur du récipient 102'.

A titre de variante, l'accessoire cuiseur vapeur 104' pourrait comporter une bague portant le générateur de vapeur. L'échappement 170' peut alors notamment être ménagé dans la bague.

A titre de variante, le récipient 2 ; 2' ; 2" peut ménager, si désiré avec l'accessoire cuiseur vapeur 4 ; 104 ; 4' ; 4", au moins un échappement 70 ; 70' ; 70" mettant en communication l'intérieur du récipient 2 ; 2' ; 2" avec l'extérieur du récipient 2 ; 2' ; 2".

A titre de variante, le générateur de vapeur 5 ; 105 peut présenter au moins un évent mettant en communication la partie inférieure 10 ; 110 du générateur de vapeur 5 ; 105 ; 5' ; 5" avec une partie extérieure 11 ; 111 du générateur de vapeur 5 ; 105 ; 5' ; 5".

La présente invention n'est nullement limitée aux exemples de réalisation décrits et à leurs variantes, mais englobe de nombreuses modifications dans le cadre des revendications.

## Revendications

1. Accessoire cuiseur vapeur (4' ; 104') pour chauffer et/ou cuire à la vapeur des aliments contenus dans un récipient (2' ; 102') portant l'accessoire cuiseur vapeur (4' ; 104'), l'accessoire cuiseur vapeur (4' ; 104') comprenant un générateur de vapeur (5' ; 105) comportant une chambre de production de vapeur (20 ; 120) reliée à au moins une sortie de distribution de vapeur (15 ; 115) ménagée dans une partie inférieure (10 ; 110) du générateur de vapeur (5' ; 105), l'accessoire cuiseur vapeur (4' ; 104') comportant une face d'appui (7' ; 107') prévue pour reposer sur le récipient (2' ; 102'), **caractérisé en ce que** la face d'appui (7' ; 107') présente une échancrure (71' ; 171') ménageant un échappement (70' ; 170') apte à mettre en communication l'intérieur du récipient (2' ; 102') avec l'extérieur du récipient (2' ; 102') lorsque le récipient (2' ; 102') porte l'accessoire cuiseur vapeur (4' ; 104').

2. Accessoire cuiseur vapeur (4') selon la revendication 1, **caractérisé en ce qu'**il comprend une bague (80') entourant et portant le générateur de vapeur (5'), et **en ce que** l'échappement (70') est ménagé dans la bague (80').

3. Accessoire cuiseur vapeur (4' ; 104') selon la revendication 2, **caractérisé en ce que** la bague (80') est amovible par rapport au générateur de vapeur (5').

4. Accessoire cuiseur vapeur (4' ; 104') selon l'une des revendications 1 à 3, **caractérisé en ce qu'**il comprend un réservoir d'eau (6' ; 106).

5. Accessoire cuiseur vapeur (4' ; 104') selon la revendication 4, **caractérisé en ce que** le réservoir d'eau (6' ; 106) est porté par la bague (80').

6. Accessoire cuiseur vapeur (4' ; 104') selon l'une des revendications 4 ou 5, **caractérisé en ce que** le réservoir d'eau (6' ; 106) alimente en eau la chambre de production de vapeur (20 ; 120).

7. Accessoire cuiseur vapeur (4') selon l'une des revendications 4 à 6, **caractérisé en ce que** le réservoir d'eau (6') est amovible par rapport au générateur de vapeur (5'), et **en ce que** le générateur de vapeur (5') porte le réservoir d'eau (6') amovible.

8. Accessoire cuiseur vapeur (104') selon la revendication 4, **caractérisé en ce que** la chambre de production de vapeur (120) comporte le réservoir d'eau (106).

9. Accessoire cuiseur vapeur (4' ; 104') selon l'une des revendications 1 à 8, **caractérisé en ce que** le générateur de vapeur (5' ; 105) présente une paroi inférieure (13 ; 113) dans laquelle est formée ladite au moins une sortie de distribution de vapeur (15 ; 115) et **en ce que** la chambre de production de vapeur (20; 120) est agencée dans le générateur de vapeur (5' ; 105) à distance de la paroi inférieure (13 ; 113).

10. Accessoire cuiseur vapeur (4' ; 104') selon l'une des revendications 1 à 9, **caractérisé en ce que** le générateur de vapeur (5' ; 105) présente une paroi latérale extérieure (12 ; 112) et **en ce que** la chambre de production de vapeur (20 ; 120) est agencée dans le générateur de vapeur (5' ; 105) à distance de la paroi latérale extérieure (12 ; 112).

11. Cuiseur vapeur électrique (1' ; 101') comportant un récipient (2' ; 102') pour contenir les aliments à chauffer et/ou à cuire et un accessoire cuiseur vapeur (4' ; 104') prévu pour reposer sur le récipient (2' ; 102') pour chauffer et/ou cuire à la vapeur les aliments contenus dans le récipient (2' ; 102'), **caractérisé en ce que** l'accessoire cuiseur vapeur (4' ; 104') est conforme à l'une des revendications 1 à 10.

## Patentansprüche

1. Dampfgarzubehör (4'; 104') zum mit Dampf erfolgenden Erwärmen und/oder Garen von Lebensmitteln, die in einem Behälter (2'; 102') enthalten sind, der das Dampfgarzubehör (4'; 104') trägt, wobei das Dampfgarzubehör (4'; 104') einen Dampferzeuger (5'; 105) umfasst, der eine Dampferzeugungskammer (20; 120) aufweist, die mit mindestens einem Dampfverteileraustritt (15; 115) verbunden ist, der in einem unteren Teil (10; 110) des Dampferzeugers (5'; 105) untergebracht ist, wobei das Dampfgarzubehör (4'; 104') eine Auflagefläche (7'; 107') aufweist, die auf dem Behälter (2'; 102') aufliegen soll, **dadurch gekennzeichnet, dass** die Auflagefläche (7'; 107') einen Einschnitt (71'; 171') aufweist, in dem ein Abzug (70'; 170') untergebracht ist, der dazu in der Lage ist, zwischen dem Innenraum des Behälters (2'; 102') und der Umgebung des Behälters (2'; 102') eine Verbindung herzustellen, wenn der Behälter (2'; 102') das Dampfgarzubehör (4'; 104') trägt.

2. Dampfgarzubehör (4') nach Anspruch 1, **dadurch gekennzeichnet, dass** es einen Ring (80') umfasst, der den Dampferzeuger (5') umgibt und trägt, und dadurch, dass der Abzug (70') in dem Ring (80') untergebracht ist.

3. Dampfgarzubehör (4'; 104') nach Anspruch 2, **dadurch gekennzeichnet, dass** der Ring (80') bezogen auf den Dampferzeuger (5') abnehmbar ist.

4. Dampfgarzubehör (4'; 104') nach einem der Ansprüche 1 bis 3, **dadurch gekennzeichnet, dass** es einen Wasservorratsbehälter (6'; 106) umfasst.

5. Dampfgarzubehör (4'; 104') nach Anspruch 4, **dadurch gekennzeichnet, dass** der Wasservorratsbehälter (6'; 106) vom Ring (80') getragen wird.

6. Dampfgarzubehör (4'; 104') nach Anspruch 4 oder 5, **dadurch gekennzeichnet, dass** der Wasservorratsbehälter (6'; 106) der Dampferzeugungskammer (20; 120) Wasser zuführt.

7. Dampfgarzubehör (4') nach einem der Ansprüche 4 bis 6, **dadurch gekennzeichnet, dass** der Wasservorratsbehälter (6') bezogen auf den Dampferzeuger (5') abnehmbar ist und dadurch, dass der Dampferzeuger (5') den abnehmbaren Wasservorratsbehälter (6') trägt.

8. Dampfgarzubehör (104') nach Anspruch 4, **dadurch gekennzeichnet, dass** die Dampferzeugungskammer (120) den Wasservorratsbehälter (106) aufweist.

9. Dampfgarzubehör (4'; 104') nach einem der Ansprüche 1 bis 8, **dadurch gekennzeichnet, dass** der Dampferzeuger (5'; 105) eine untere Wand (13; 113) aufweist, in der der mindestens eine Dampfverteileraustritt (15; 115) ausgebildet ist, und dadurch, dass die Dampferzeugungskammer (20; 120) in dem Dampferzeuger (5'; 105) in einem Abstand zur unteren Wand (13; 113) angeordnet ist.

10. Dampfgarzubehör (4'; 104') nach einem der Ansprüche 1 bis 9, **dadurch gekennzeichnet, dass** der Dampferzeuger (5'; 105) eine seitliche Außenwand (12; 112) aufweist und dadurch, dass die Dampferzeugungskammer (20; 120) in dem Dampferzeuger (5'; 105) in einem Abstand zur seitlichen Außenwand (12; 112) angeordnet ist.

11. Elektrischer Dampfgarer (1'; 101'), der einen Behälter (2'; 102') zum Aufnehmen der zu erwärmenden und/oder zu garenden Lebensmittel und ein Dampfgarzubehör (4'; 104') aufweist, das auf dem Behälter (2'; 102') aufliegen soll, damit die Lebensmittel, die in dem Behälter (2'; 102') enthalten sind, mit Dampf erwärmt und/oder gegart werden, **dadurch gekennzeichnet, dass** das Dampfgarzubehör (4'; 104') einem der Ansprüche 1 bis 10 entspricht.

## Claims

1. Steamer accessory (4'; 104') for steam-heating and/or -cooking food contained in a container (2'; 102') carrying the steamer accessory (4'; 104'), the steamer accessory (4'; 104') comprising a steam generator (5'; 105) comprising a steam production chamber (20; 120) connected to at least one steam distribution outlet (15; 115) provided in a lower part (10; 110) of the steam generator (5'; 105), the steamer accessory (4'; 104') comprising a bearing surface (7'; 107') intended to rest on the container (2'; 102'), **characterised in that** the bearing surface (7'; 107') has an indentation (71'; 171') providing a vent (70'; 170') capable of bringing the inside of the container (2'; 102') into communication with the outside of the container (2'; 102') when the container (2'; 102') carries the steamer accessory (4'; 104').

2. Steamer accessory (4') according to claim 1, **characterised in that** it comprises a ring (80') surrounding and carrying the steam generator (5'), and **in that** the vent (70') is arranged in the ring (80').

3. Steamer accessory (4'; 104') according to claim 2, **characterised in that** the ring (80') is removable with respect to the steam generator (5').

4. Steam accessory (4'; 104') according to one of claims 1 to 3, **characterised in that** it comprises a water tank (6'; 106).

5. Steamer accessory (4'; 104') according to claim 4, **characterised in that** the water tank (6'; 106) is carried by the ring (80').

6. Steamer accessory (4'; 104') according to one of claims 4 or 5, **characterised in that** the water tank (6'; 106) supplies water to the steam production chamber (20; 120).

7. Steamer accessory (4') according to one of claims 4 to 6, **characterised in that** the water tank (6') is removable with respect to the steam generator (5'), and **in that** the steam generator (5') carries the removable water tank (6').

8. Steamer accessory (104') according to claim 4, **characterised in that** the steam production chamber (120) comprises the water tank (106).

9. Steamer accessory (4'; 104') according to one of claims 1 to 8, **characterised in that** the steam generator (5'; 105) has a lower wall (13; 113) wherein is formed said at least one steam distribution outlet (15; 115) and **in that** the steam production chamber (20; 120) is arranged in the steam generator (5'; 105) at a distance from the lower wall (13; 113).

10. Steamer accessory (4'; 104') according to one of claims 1 to 9, **characterised in that** the steam generator (5'; 105) has an outer side wall (12; 112) and **in that** the steam production chamber (20; 120) is arranged in the steam generator (5'; 105) at a distance from the outer side wall (12; 112).

11. Electric steamer (1'; 101') comprising a container (2'; 102') for containing the food to be heated and/or cooked, and a steamer accessory (4'; 104') intended to rest on the container (2'; 102') for steam-heating and/or -cooking the food contained in the container (2'; 102'), **characterised in that** the steamer accessory (4'; 104') is in accordance with one of claims 1 to 10.
